# EUROPÄISCHE PATENTANMELDUNG

(11) **EP 3 168 039 A1**
(43) Veröffentlichungstag der Anmeldung: **17.05.2017**
(21) Anmeldenummer: 15198406.9
(22) Anmeldetag: 08.12.2015
(51) Int. Cl.: B32B 5/02, A41D 31/02

(54) **MEHRLAGEN-LAMINAT**

(30) Priorität: 12.11.2015 DE 102015014632
(71) Anmelder: Head Technology GmbH, 6921 Kennelbach (AT); Monahan, Bobbie, Portland, OR 97210 (US)
(72) Erfinder: Monahan, Bobbie, Portland, OR 97210 (US); Rindle, Markus, 6858 Schwarzach (AT)
(74) Vertreter: Vossius & Partner Patentanwälte Rechtsanwälte mbB

(57) **Zusammenfassung**

Mehrlagen-Laminat zur Herstellung von Bekleidungsartikeln und Verfahren zur Herstellung eines Mehrlagen-Laminats zur Herstellung von Bekleidungsartikeln. Das Mehrlagen-Laminat weist mindestens eine erste Lage auf, die aus einem wasserdichten und atmungsaktiven Material besteht. Das Mehrlagen-Laminat weist ferner mindestens eine zweite gestrickte oder gewirkte Lage auf, die auf einer Seite der ersten Lage angeordnet ist, wobei die zweite gestrickte oder gewirkte Lage mindestens einen ersten Bereich mit Öffnungen mindestens einer ersten Größe aufweist und mindestens einen zweiten Bereich mit Öffnungen mindestens einer zweiten Größe aufweist und wobei die unterschiedlichen Bereiche nahtlos ineinander übergehen.

## Beschreibung

Die vorliegende Erfindung bezieht sich auf ein Mehrlagen-Laminat zur Herstellung von Bekleidungsartikeln, ein Verfahren zur Herstellung des Mehrlagen-Laminats und einen Bekleidungsartikel mit dem Mehrlagen-Laminat.

Das Dokument WO 2015/100369 A1 zeigt ein mehrlagiges Textilmaterial, bestehend aus einer ersten Lage und einer zweiten gestrickten Lage, wobei die gestrickte Lage eine vorbestimmte Maschenweite aufweist. Durch die Verwendung einer einzigen gestrickten Lage mit einer vorbestimmten Maschenweite ist die Atmungsaktivität des mehrlagigen Textilmaterials eingeschränkt, und zwar auf die Atmungsaktivität durch die vorbestimmte Maschenweite.

Ebenfalls bekannt sind verschiedene einzeln hergestellte gestrickte Lagen mit jeweils vorbestimmten Maschenweiten, welche zu einer Lage eines Bekleidungsartikels zusammengesetzt (z.B. vernäht) werden. So können verschieden Bereiche mit unterschiedlichen Maschenweiten eines Bekleidungsartikels hergestellt werden. Bei diesen zusammengesetzten Lagen bestehen Probleme der Haltbarkeit besonders an den Nähten der so zusammengesetzten Lagen. Ferner ist die Herstellung solcher zusammengesetzter Lagen aufwendig und dementsprechend teuer.

Die der vorliegenden Erfindung zu Grunde liegende Aufgabe besteht unter anderem darin, ein verbessertes Mehrlagen-Laminat und ein verbessertes Verfahren zu dessen Herstellung bereitzustellen, das ein oder mehrere der oben erwähnten Probleme des Stands der Technik beseitigt.

Diese Aufgabe wird mit den Merkmalen der unabhängigen Patentansprüche gelöst. Die abhängigen Patentansprüche beziehen sich auf weitere Aspekte der Erfindung.

Gemäß einem Aspekt der vorliegenden Erfindung wird ein Mehrlagen-Laminat zur Herstellung von Bekleidungsartikeln bereitgestellt. Das Mehrlagen-Laminat weist dabei mindestens eine erste Lage, die aus einem wasserdichten und atmungsaktiven Material besteht, und mindestens eine zweite gestrickte oder gewirkte Lage, die auf einer Seite der ersten Lage angeordnet und mit dieser verbunden ist, auf. Die zweite gestrickte oder gewirkte Lage weist mindestens einen ersten Bereich mit Öffnungen mindestens einer ersten Größe auf und mindestens einen zweiten Bereich mit Öffnungen mindestens einer zweiten Größe auf, wobei sich die zweite Größe von der ersten Größe unterscheidet. Die unterschiedlichen Bereiche mit den unterschiedlich großen Öffnungen gehen dabei nahtlos ineinander über.

Mit anderen Worten gehen die unterschiedlichen Bereiche kontinuierlich ineinander über, ohne dass zwischen diesen eine Naht oder andere Form der Verbindung (z.B. eine Verklebung) bestehen würde. Die unterschiedlichen Bereiche werden demnach nicht aus unterschiedlichen Materialstücken zusammengesetzt, sondern in einem einheitlichen Produktionsprozess am Stück gefertigt. Dies hat unterschiedliche Vorteile: Zunächst ist eine nahtlose Verbindung robuster und weniger anfällig für ein Lösen der unterschiedlichen Bereiche voneinander (durch Aufgehen der Naht oder Nachlassen der Adhäsionskraft bei einer Klebverbindung). Darüber hinaus ist die Herstellung in einem Stück, d.h. in einem kontinuierlichen Prozess, weniger aufwendig und dementsprechend kostengünstiger und gewichtreduzierend. Dies erlaubt die Herstellung sehr komplexer Laminate (bzw. daraus gefertigter Bekleidungsstücke) mit einer Vielzahl von unterschiedlichen Bereichen mit jeweils unterschiedlich großen und/oder anders geformten Öffnungen. Dadurch lassen sich die Materialeigenschaften sehr gezielt an die jeweiligen Anforderungen, die sich an unterschiedlichen Körperpartien stellen, anpassen.

Die Atmungsaktivität eines Materials beschreibt die Eigenschaft, den beim Schwitzen entstehenden Wasserdampf abzuführen und dadurch für einen angenehmen Hautkomfort zu sorgen. Atmungsaktivität wird bevorzugt nach dem Wasserdampfdurchgangswiderstand "RET-Wert" gemäß EN 31092 / ISO 11092 bestimmt. Der so genannte RET-Wert ist ein Maß für den Wasserdampfdurchgangswiderstand eines Materials und zeigt an, ob ein Material dem entstehenden Wasserdampf einen großen oder nur einen geringen Widerstand entgegensetzt. Je geringer der Widerstand ist, desto besser atmet das Material. Die Einheit des Wasserdampfdurchgangswiderstands ist m²Pa/W. Unter einem atmungsaktiven Material bzw. einer Lage, die aus einem atmungsaktiven Material besteht, wird im Kontext der vorliegenden Erfindung ein Material bzw. eine Lage verstanden, das bzw. die einen RET-Wert von höchstens 20 m²Pa/W, bevorzugt höchstens 13 m²Pa/W und besonders bevorzugt höchstens 6 m²Pa/W aufweist.

Wasserdichtigkeit wird bevorzugt gemäß EN 20811:1992 / ISO 811 bestimmt. Die DIN EN 20811:1992, auch ISO 811 genannt, regelt die Methode zur Bestimmung des Widerstandes gegen das Durchdringen von Wasser. Durchzuführen ist folgender "Hydrostatischer Wasserdruckversuch": Die Außenseite des Materials wird dem Wasser ausgesetzt. Der Wasserdruck beginnt bei Null, die Wassersäule steigt um 100 mmWS pro Minute. Gemessen wird die Zeit, bis der dritte Tropfen auf der Innenseite zu sehen ist. Der Druck, der zu diesem Zeitpunkt wirkt, wird dann in Millimeter Wassersäule (mmWS) angegeben. Unter einem wasserdichten Material bzw. einer Lage, die aus einem wasserdichten Material besteht, wird im Kontext der vorliegenden Erfindung ein Material bzw. eine Lage verstanden, das bzw. die mindestens 800 mmWS, bevorzugt mindestens 1.300 mmWS, stärker bevorzugt mindestens 4.000 mmWS und besonders bevorzugt mindestens 20.000 mmWS aufweist.

Bei der ersten Lage kann es sich um eine separate Material-Lage handeln, die mit der zweiten gestrickten oder gewirkten Lage verbunden, beispielsweise verklebt, ist. Alternativ kann es sich bei der ersten Lage um eine Beschichtung der zweiten Lage handeln. Bevorzugte Materialien für die erste Lage sind PES, PTFE und PU. Bevorzugt handelt es sich bei der ersten Schicht um ein non-woven.

Die Beschichtung wird vorzugsweise als Feststoff oder Flüssigkeit aufgetragen. Im ersteren Fall werden vorgefertigte Folien, auch Schaumfolien, mittels Kleber oder auch durch Anschmelzen mit dem textilen Substrat dauerhaft verbunden. Dieser Vorgang wird als "Laminierung" bezeichnet. Eine weitere bevorzugte Möglichkeit ist das Einstreuen von schmelzbaren, pulverisierten Kunststoffen (Thermoplasten) auf den Textilträger und anschließendes Aufschmelzen und Verdichten mittels heißer Walzen, die den Kunststoff gegen das Trägermaterial pressen. Solche Thermoplaste können auch mittels Extrusion oder über Kalanderwerke aufgeschmolzen und direkt auf das Textil aufgetragen und angepresst werden. Bei der Applikation von Flüssigkeiten handelt es sich vorzugsweise um Lösungen von Kunststoffen in organischen Lösungsmitteln, lösungsmittelfreie, reaktive Massen (High Solids Polyurethane), wässrige Dispersionen oder Plastisole, die durch geeignete Auftragsverfahren mit dem Trägermaterial verbunden werden. Die Auftragung erfolgt durch Tauchen, Rakeln, Walzenauftrag, Druck oder Spritzverfahren.

Bei der zweiten Lage handelt es sich um ein Gestrick oder ein Gewirke, das unter Verwendung eines Strickverfahrens bzw. eines Wirkverfahrens, z.B. unter Verwendung des Raschel-Jacquard-Verfahrens, durch Warpknit, einem elektronisch ansteuerbaren Kettenwirkautomaten oder auch Flachbettstricken, als eine ununterbrochene, nahtlose Lage hergestellt wurde. Bevorzugte Materialien für die zweite Lage sind Polyester, Polyamid, Elastan, Acryl, Baumwolle, Wolle, Seide und Mischungen dieser Materialen. Grundsätzlich kann die zweite Lage aber jedes beliebige Material aufweisen, das sich mit Hilfe der genannten Strickverfahren bzw. Wirkverfahren bearbeiten lässt.

Vorzugsweise wird die Oberfläche der zweiten Lage, die nicht mit der ersten Lage verbunden ist, d.h. die Oberfläche der zweiten Lage, die eine Außenfläche bildet und somit Wettereinflüssen ausgesetzt ist, mit wasserabweisenden Mitteln, wie z.B. Fluor Karbonen, Silikonen oder anderen geeigneten Stoffen, ausgerüstet.

Das Mehrlagen-Laminat kann optional eine oder mehrere zusätzliche Lagen aufweisen. Bevorzugt weist das Mehrlagen-Laminat mindestens eine dritte Lage auf, die auf der von der zweiten Lage abgewandten Seite der ersten Lage angeordnet ist.

Bei der dritten Lage kann es sich ebenfalls um eine gestrickte oder gewirkte Lage handeln, welche(s) eine offene oder geschlossene Struktur aufweisen kann. Die dritte Lage kann z.B. geeignet sein, vor Abnutzung der ersten Lage durch Reibung an bestimmten Köperstellen zu schützen. Dazu kann die dritte Lage auch in einzelnen Teilen (nicht in einem zusammenhängendem Stück) mit der ersten Lage verbunden sein. Mit anderen Worten, die dritte Lage muss nicht die gleiche Ausdehnung, wie die erste Lagen haben, sondern kann nur an bestimmten (einer oder auch mehreren) Stellen der ersten Lage vorgesehen sein. Durch die Bereitstellung der dritten Lage an bestimmten lokalen Stellen der ersten Lage kann das Gesamtgewicht gegenüber einem Mehrlagen-Laminat mit drei gleichgroßen Lagen (dritte Lage hat in etwa die gleiche Ausdehnung wie die erste und zweite Lage) zusätzlich reduziert werden. Bevorzugte Materialien für die dritte Lagen sind Polyester, Polyamid, Elastan, Acryl, Baumwolle, Wolle, Seide und Mischungen dieser Materialien.

Vorzugsweise ist die Oberfläche der dritten Lage, die dem Körper zugewandt ist, d.h. die Oberfläche der dritten Lage, die nicht mit der ersten Lage verbunden ist, mit einer hydrophilen oder hydrophoben und/oder antibakteriellen Eigenschaft ausgestattet, z.B. durch Beschichten der Lage (z.B. in einem Waschvorgang), durch einen geeigneten Ausrüstungsvorgang oder durch die Verwendung von vorbearbeitetem (d.h. von hydrophilem oder hydrophobem und/oder antibakteriellem) Garn.

Die dritte Lage kann mindestens einen ersten Bereich mit Öffnungen mindestens einer dritten Größe aufweisen und/oder mindestens einen zweiten Bereich mit Öffnungen mindestens einer vierten Größe aufweisen. Dadurch kann eine unterschiedlich starke Atmungsaktivität und/oder Belüftungswirkung an mehreren unterschiedlichen Körperstellen erreicht werden.

Vorzugsweise ist der mindestens eine erste Bereich der dritten Lage und der der mindestens eine erste Bereich der zweiten gestrickten oder gewirkten Lage im Wesentlichen in Registrierung miteinander angeordnet. Die erste und dritte Größe und/oder die zweite und vierte Größe können im Wesentlichen gleich sein, wobei bevorzugt die Öffnungen im ersten Bereich der ersten Lage und die Öffnungen im ersten Bereich der zweiten gestrickten oder gewirkten Lage im Wesentlichen in Registrierung miteinander angeordnet sind und/oder die Öffnungen im zweiten Bereich der ersten Lage und die Öffnungen im zweiten Bereich der zweiten gestrickten oder gewirkten Lage im Wesentlichen in Registrierung miteinander angeordnet sind. Dies gilt bevorzugt gleichermaßen, falls mehr als zwei Bereiche vorhanden sind.

Mit anderen Worten sind die unterschiedlichen Bereiche der dritten und der zweiten gestrickten oder gewirkten Lage übereinander (durch die erste Lage getrennt) angeordnet, um an den gleichen Körperstellen für eine verbesserte, aber jeweils lokal optimierte Belüftung und Feuchtigkeitsabtransport zu sorgen. Besonders bevorzugt sind auch die Öffnungen der beiden Lagen in den zueinander angeordneten Bereichen in etwa an gleichen Stellen ausgebildet. Die Öffnungen können allerdings auch verschiedene Größen in den zueinander angeordneten Bereichen aufweisen. Zum Beispiel kann die dritte Lage durchaus größere Öffnungen als die zweite gestrickte oder gewirkte Lage aufweisen, um eine verbesserte Atmungsaktivität und/oder Belüftung direkt am Körper des Nutzers zu erzielen, ohne die Haltbarkeit der äußeren zweiten gestrickten oder gewirkten Lage zu beeinflussen. Mit anderen Worten kann es durchaus vorteilhaft sein, die äußere, zweite gestrickte oder gewirkte Lage mit kleineren Öffnungen als die dritte Lage zu versehen, da große Öffnungen der zweiten gestrickten oder gewirkten Lage durch äußere Einflüsse die Haltbarkeit dieser Lage nachteilig beeinflussen können. Umgekehrt kann es durchaus vorteilhaft sein, die Öffnungen der dritten Lage kleiner als die Öffnungen der zweiten gestrickten oder gewirkten Lage auszubilden, um dadurch Abnutzungseffekte durch Reibung der Körperstellen an der dritten Lage zu verringern.

Die Öffnungen im ersten und/oder zweiten Bereich der dritten Lage und/oder der zweiten gestrickten oder gewirkten Lage haben bevorzugt eine Öffnungsquerschnittfläche von mindestens 0,2 mm², bevorzugt von mindestens 1,0 mm² und besonders bevorzugt von mindestens 3,75 mm². Die Öffnungen im ersten und/oder zweiten Bereich der dritten Lage und/oder der zweiten gestrickten oder gewirkten Lage haben bevorzugt eine Öffnungsquerschnittfläche von höchstens 100 mm², bevorzugt von höchstens 27 mm² und besonders bevorzugt von höchstens 5 mm². Die Öffnungen können im ersten und/oder zweiten Bereich der dritten Lage und/oder der zweiten gestrickten oder gewirkten Lage eine Öffnungsquerschnittfläche zwischen 0,2 mm² und 100 mm², bevorzugt zwischen 1,0 mm² und 27,0 mm² und besonders bevorzugt zwischen 3,75 mm² und 5 mm² aufweisen.

Die zweite gestrickte oder gewirkte Lage kann dabei eine bestimmte herstellungsbedingte Maschenweite aufweisen, wobei die Öffnungen der zweiten gestrickten oder gewirkten Lage größer sind als die herstellungsbedingte Maschenweiten der zweiten gestrickten oder gewirkten Lage. Anders formuliert, die Öffnungen gemäß der vorliegenden Erfindung sind größer als eine durch das Herstellungsverfahren (z.B. Raschel-Jacquard-Verfahren oder elektronisch ansteuerbarer Kettenwirkautomat) bedingte Maschenweite (bzw. herstellungsbedingte kleinste Maschenweite). Die Dichte der Maschen (herstellungsbedingte Maschenweite) eines Gestrickes oder eines Gewirkes hängt dabei von der verwendeten Maschine und deren Einstellungen bzw. Konfigurationen ab (z.B. Nadeln pro Zoll). Die herstellungsbedingte Maschenweite kann auch als eine legungsbedingte bzw. legungstechnische Öffnungsgröße oder Maschenweite bezeichnet werden. Üblicherweise sind 200 bis 300 Maschen (Öffnungen) auf einem Quadratzentimeter vorgesehen und bilden eine herstellungsbedingte Maschenweite, die zusätzlich vom verwendeten Garn abhängt. Vorzugsweise führt eine herstellungsbedingte (legungstechnische) Maschenweite zu Öffnungen mit einer Öffnungsquerschnittfläche von kleiner als 1 mm², bevorzugt kleiner als 0,6 mm², stärker bevorzugt kleiner als 0,3 mm² und besonders bevorzugt kleiner als 0,1 mm². Bevorzugt sind die Öffnungen der zweiten gestrickten oder gewirkten Lage um ein Vielfaches größer als die herstellungsbedingte Maschenweiten der zweiten gestrickten oder gewirkten Lage. Bevorzugt beträgt das Verhältnis zwischen der Öffnungsquerschnittfläche der ersten und/oder zweiten Öffnungen und der Öffnungsquerschnittfläche der legungstechnischen Maschen mindestens 5, stärker bevorzugt mindestens 10, noch stärker bevorzugt mindestens 15 und besonders bevorzugt mindestens 20. Bevorzugt erscheinen diejenigen Bereiche, bei denen lediglich Maschen mit einer legungstechnischen Öffnung vorliegen, im Wesentlichen blickdicht, d.h. die durch die Maschen gebildeten Öffnungen werden mit bloßem Auge nicht wahrgenommen. Im Gegensatz dazu sind die Öffnungen der ersten und zweiten Größe bevorzugt ohne technische Hilfsmittel erkennbar. D.h. es liegen bevorzugt zusätzlich zu den legungstechnischen Öffnungen weitere, größere Öffnungen einer ersten und zweiten Größe in unterschiedlichen Bereichen des Laminats vor.

Die Öffnungen mit der ersten Größe im ersten Bereich der zweiten gestrickten oder gewirkten Lage können beispielsweise eine Öffnungsquerschnittfläche von mindestens 50%, bevorzugt mindesten 100%, besonders bevorzugt mindestens 200% größer sein als die Öffnungsquerschnittfläche der Öffnungen mit der zweiten Größe im zweiten Bereich der zweiten gestrickten oder gewirkten Lage.

Die zweite gestrickte oder gewirkte Lage und/oder die dritte Lage können innerhalb mindestens eines der Bereiche Öffnungen mit mindestens zwei unterschiedlichen Größen aufweisen. Mit anderen Worten, ein Bereich kann durchaus verschieden große Öffnungen oder auch verschiedene Formen aufweisen, um eine besonders gute Belüftung, Feuchtigkeitsabtransport und gleichzeitig eine bestmögliche Haltbarkeit zu gewährleisten.

Vorzugsweise weisen die Bereiche der zweiten gestrickten oder gewirkten und/oder dritten Lage jeweils mindestens 10 Öffnungen, bevorzugt mindestens 20 Öffnungen, weiter bevorzugt mindestens 50 Öffnungen und vorzugsweise mindestens 100 Öffnungen auf.

Die Größe der verschiedenen Bereiche ist vorzugsweise zwischen 1 cm² und 2000 cm², bevorzugt zwischen 5 cm² und 100 cm² und besonders bevorzugt zwischen 10 cm² und 50 cm². Es werden bevorzugt zwischen 4 und 48 Bereiche, besonders bevorzugt zwischen 8 und 24 Bereiche und vorzugsweise 12 bis 16 Bereiche, pro gestrickter oder gewirkter Lage (zweite oder dritte Lage) und zwischen 4 und 144 , bevorzugt zwischen 8 und 100 und besonders bevorzugt zwischen 16 und 50 Bereiche pro Bekleidungsstück vorgesehen.

Gemäß eines weiteren Aspekts der vorliegenden Erfindung wird ein Bekleidungsartikel mit einem Mehrlagen-Laminat wie oben beschrieben bereitgestellt, wobei die erste oder die dritte Lage eine Innenseite des Bekleidungsartikels darstellt und die zweite gestrickte oder gewirkte Lage eine Außenseite des Bekleidungsartikels darstellt. Grundsätzlich ist die vorliegende Erfindung nicht auf bestimmte Bekleidungsartikel beschränkt. Mögliche Bekleidungsartikel, die mit dem erfindungsgemäßen Mehrlagen-Laminat hergestellt werden können, sind Oberbekleidungsprodukte wie z.B. Jacken, Mäntel, Kleider, Pullover, Hemden, T-Shirts, Armstulpen, Kappen, Mützen, Kapuzen etc. Ferner können auch Unterbekleidungsprodukte wie z.B. Hosen, ¾-Hosen, Shorts, Röcke, Beinstulpen etc. mit dem erfindungsgemäßen Mehrlagen-Laminat hergestellt werden.

Es ist besonders bevorzugt, dass die Bereiche mit Öffnungen der zweiten gestrickten oder gewirkten und/oder der dritten Lage beim Tragen an besonders schweißbildenden Körperstellen angeordnet sind, wie z.B. den Achselhöhlen, im Taillenbereich unterhalb eines Bundes, an der vorderen Passe, an der Innenseite des Oberschenkels, auf den Knien, an den Schienenbeinen, im Bereich der Kniekehle und/oder im Bereich der Wade. Die Bereiche mit Öffnungen sind allerdings nicht auf diese beispielhafte Auflistung beschränkt, sondern können je nach Bekleidungsartikel nach Verwendung, persönliche Vorlieben und/oder Anforderungen angepasst werden.

Gemäß eines weiteren Aspekts der vorliegenden Erfindung wird ein Verfahren zur Herstellung eines Mehrlagen-Laminats für Bekleidungsartikel bereitgestellt. Das Verfahren gemäß der vorliegenden Erfindung weist die folgenden Schritte auf: (a) Bereitstellen mindestens einer ersten wasserdichten und atmungsaktiven Lage und mindestens einer zweiten gestrickten oder gewirkten Lage, wobei die zweite gestrickte oder gewirkte Lage mindestens einen ersten Bereich mit Öffnungen mindestens einer ersten Größe aufweist und mindestens einen zweiten Bereich mit Öffnungen mindestens einer zweiten Größe aufweist und wobei die unterschiedlichen Bereiche nahtlos ineinander übergehen; und (b) Verbinden der zweiten gestrickten oder gewirkten Lage mit einer Seite der ersten Lage.

Das Verfahren kann ferner aufweisen: Bereitstellen mindestens einer dritten Lage und Verbinden der dritten Lage mit der von der zweiten Lage abgewandten Seite der ersten Lage, wobei die dritte Lage vorzugsweise mindestens einen ersten Bereich mit Öffnungen mindestens einer dritten Größe aufweist und mindestens einen zweiten Bereich mit Öffnungen mindestens einer vierten Größe aufweist und wobei die unterschiedlichen Bereiche besonders bevorzugt nahtlos ineinander übergehen.

Dabei kann das Bereitstellen der zweiten gestrickten oder gewirkten Lage und/oder der dritten Lage kontinuierliches Stricken oder Wirken der zweiten gestrickten oder gewirkten Lage und/oder der dritten Lage aufweisen, wobei das kontinuierliche Stricken oder Wirken vorzugsweise durch das Raschel-Jacquard-Verfahren oder durch einen elektronisch ansteuerbaren Kettenwirkautomaten erfolgt.

Mit Hilfe des kontinuierlichen Strickens oder Wirkens können sowohl Bereiche mit einer bestimmten herstellungsbedingten Maschenweite (kleinstmöglichen herstellungsbedingten Maschenweite) als auch die mindestens zwei Bereiche mit Öffnungen hergestellt werden, wobei die Öffnungen größer als die herstellungsbedingte Maschenweite sind und die verschiedenen Bereiche nahtlos ineinander übergehen.

Alternativ zum kontinuierlichen Stricken oder Wirken kann das Verfahren ferner das Einbringen von Öffnungen mindestens der dritten Größe in mindestens den ersten Bereich und Öffnungen mindestens der vierten Größe in mindestens den zweiten Bereich der dritten Lage aufweisen, wobei das Einbringen der Öffnungen in die dritte Lage vorzugsweise mittels Schneiden, Stanzen und/oder Laserschmelzen erfolgt. Andere bekannte Verfahren zum nachträglichen Einbringen von Öffnungen sind ebenfalls möglich und ggf. vom verwendeten Material abhängig.

Das zuvor beschriebene Verbinden der zweiten gestrickten oder gewirkten Lage mit einer Seite der ersten Lage und/oder das Verbinden der dritten Lage mit der von der zweiten Lage abgewandten Seite der ersten Lage kann mittels Verkleben erfolgen.

Vorzugsweise kann das Verfahren ferner ein Bereitstellen einer oder mehrerer weiterer Lagen und ein Verbinden dieser Lage(n) mit der ersten und der dritten Lage aufweisen, sodass die eine oder mehrere weitere Lagen zwischen der ersten und der dritten Lage angebracht ist/sind. In diesem Fall befinden sich die erste und die dritte Lage nicht in direktem Kontakt zueinander, sondern sind durch diese eine oder mehrere weitere Lage(n) getrennt.

Die vorliegende Erfindung ist nicht auf zwei Bereiche mit unterschiedlichen Öffnungen beschränkt. Die vorliegende Erfindung umfasst vielmehr auch mehr als zwei (beispielsweise drei, vier, fünf oder mehr) Bereiche, wobei mehrere Bereiche mit ersten Öffnungen und/oder mehrere Bereiche mit zweiten Öffnungen vorgesehen sein können oder aber weitere Bereiche mit Öffnungen jeweils anderer Größe vorhanden sein können. Ferner kann der erste oder zweite Bereich der zweiten Lage auch lediglich Öffnungen aufweisen, die durch die herstellungsbedingte Maschenweite definiert werden, sodass die ersten Öffnungen des ersten Bereichs der zweiten gestrickten oder gewirkten Lage oder die zweiten Öffnungen des zweiten Bereichs der zweiten Lage Öffnungen entsprechend der herstellungsbedingten Maschenweite sind.

Demnach soll die vorliegende Erfindung ebenfalls ein Mehrlagen-Laminat zur Herstellung von Bekleidungsartikeln bereitstellen, wobei das Mehrlagen-Laminat aufweist: mindestens eine erste Lage, die aus einem wasserdichten und atmungsaktiven Material besteht, und mindestens eine zweite gestrickte oder gewirkte Lage, die auf einer Seite der ersten Lage angeordnet ist, wobei die zweite gestrickte oder gewirkte Lage mindestens einen ersten Bereich mit Öffnungen mindestens einer ersten Größe aufweist und mindestens einen zweiten Bereich mit herstellungsbedingten Öffnungen mindestens einer zweiten Größe aufweist und wobei die unterschiedlichen Bereiche nahtlos ineinander übergehen. Entsprechendes gilt für eine evtl. vorgesehene dritte Lage. Alle zuvor beschriebenen Merkmale sind entsprechend auf diese Ausführungsform der Erfindung anzuwenden und das zuvor beschriebene entsprechende Verfahren kann äquivalent ausgeführt werden.

Nachfolgend werden bevorzugte Ausführungsformen der vorliegenden Erfindung anhand der Figuren näher beschrieben. Es zeigen:
Fig. 1 eine schematische Darstellung eines Mehrlagen-Laminats gemäß einer bevorzugten Ausführungsform der Erfindung,
Fig. 2 eine schematische Draufsicht auf ein Mehrlagen-Laminat gemäß einer weiteren bevorzugten Ausführungsform der Erfindung,
Fig. 3 eine schematische Draufsicht auf ein Mehrlagen-Laminat gemäß einer weiteren bevorzugten Ausführungsform der Erfindung,
Fig. 4 eine schematische Querschnittansicht eines Mehrlagen-Laminats gemäß einer weiteren bevorzugten Ausführungsform der Erfindung und
Fig. 5 eine schematische Draufsicht auf ein Mehrlagen-Laminat gemäß einer weiteren bevorzugten Ausführungsform der Erfindung
Fig. 6 eine schematische Darstellung eines T-Shirts mit beispielhaften Bereichen mit unterschiedlichen Öffnungen,
Fig. 7 eine schematische Darstellung eines menschlichen Körpers mit beispielhaft angedeuteten bevorzugten Positionen für Bereiche mit Öffnungen verschiedener Größe,
Fig. 8 eine schematische Darstellung einer Jacke mit beispielhaft angedeuteten Bereichen mit Öffnungen verschiedener Größe gemäß einer bevorzugten Ausführungsform der vorliegenden Erfindung und
Fig. 9 ein schematisches Ablaufdiagramm gemäß einer bevorzugten Ausführungsform des erfindungsgemäßen Verfahrens.

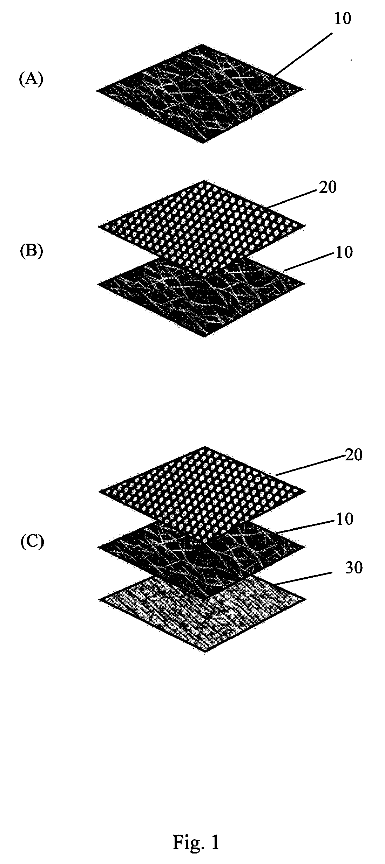

Fig.1 zeigt die verschiedenen Lagen 10, 20, 30 eines erfindungsgemäßen Mehrlagen-Laminats gemäß einer bevorzugten Ausführungsform. Eine erste Lage 10 bildet den Ausgangspunkt (siehe (A)). Diese erste Lage 10 wird in einem weiteren Schritt (B) mit einer zweiten Lage 20 verbunden. In einem weiteren Schritt (C) wird optional eine dritte Lage 30 bereitgestellt und mit einer der der zweiten Lage 20 gegenüberliegenden Seite der ersten Lage 10 verbunden. Die Verbindungen können vorzugsweise durch Verkleben oder auch durch andere bekannte Verfahren erfolgen. Das Verkleben kann durch großflächiges oder punktuelles Verkleben realisiert werden, wobei die Klebepunkte in Größe, Form und Abstand zueinander variieren kann. Der Kleberauftrag variiert dabei vorzugsweise zwischen 2-18 g/ m² unter Verwendung einer Röselwalze (Punkte) und zwischen 19-50 g/m² bei einer Rautenschraffur. Vorzugsweise wird eine entsprechende Walze zum Auftragen des Klebers mit einer vorgegebenen Struktur, die dem gewünschten Klebemuster entspricht, verwendet. Besonders bevorzugt ist ein Auftragen des Klebers in Abhängigkeit der Bereiche mit unterschiedlichen Öffnungen, d.h. der Kleber wird bevorzugt nur dort aufgebracht wo sich keine Öffnungen (abgesehen von herstellungsbedingten Öffnungen) befinden, um die Atmungsaktivität zu verbessern.

Bei der ersten Lage 10 handelt es sich z.B. um ein elastisches, atmungsaktives und wasserdichtes Material (Membrane oder Beschichtung) aus beispielsweise PES, recyceltem PES, PTFE oder PU. Bevorzugt handelt es sich bei der ersten Lage 10 um ein non-woven.

Bei der zweiten Lage 20 handelt es sich um ein Gestrick oder ein Gewirke, das unter Verwendung eines Strickverfahrens bzw. Wirkverfahrens, z.B. unter Verwendung des Raschel-Jacquard-Verfahrens, durch Warpknit oder auch Flachbettstricken als eine ununterbrochene (nahtlose) Lage hergestellt wird. Dabei weist die zweite Lage 20 mindestens zwei Bereiche mit unterschiedlich großen Öffnungen auf. Durch das Herstellungsverfahren bedingte Maschenweiten werden in dieser Beschreibung nicht als Öffnungen im Sinne der vorliegenden Erfindung bezeichnet. Mit anderen Worten, die in dieser Beschreibung offenbarten Öffnungen (Öffnungsquerschnittflächen) sind größer als eine herstellungsbedingte Maschenweite bzw. die kleinst mögliche herstellungsbedingte Maschenweite, wobei die herstellungsbedingte Maschenweite von dem spezifischen Herstellungsverfahren, den maschinellen Toleranzen und dem verwendeten Garn abhängt. Bereiche, die lediglich eine herstellungsbedingte Maschenweite aufweisen, werden nachfolgend auch als geschlossene Bereiche bezeichnet. Die Öffnungen (Öffnungsquerschnittflächen) sind vorzugsweise grösser als 0,2 mm² und kleiner als 100 mm², bevorzugt zwischen 1,0 mm² und 27,0 mm² und besonders bevorzugt zwischen 3,75 mm² und 5 mm² und können in ihrer Form variieren. Sie können kreisförmig, elliptisch rechteckig, streifenförmig etc. sein.

Die unterschiedlichen Bereiche der zweiten Lage 20 können dabei unterschiedliche Öffnungsformen und/oder Öffnungsgrößen aufweisen. Ebenfalls möglich ist es, variierende Öffnungsformen und/oder Öffnungsgrößen innerhalb eines Bereichs bereitzustellen.

Die unterschiedlichen Bereiche der zweiten Lage 20 können dabei direkt ineinander übergehen oder durch einen geschlossenen Bereich (Bereich mit herstellungsbedingter Maschenweite) voneinander getrennt sein. Beispielhaft kann ein Bereich mit Öffnungen von 1,0 mm² nahtlos in einen Bereich mit Öffnungen von 3,0 mm² übergehen. Dabei kann zwischen den beiden Bereichen mit den unterschiedlichen Öffnungen ein Bereich ohne Öffnungen (geschlossener Bereich) vorgesehen sein. Alternativ können die beiden Bereiche direkt ineinander übergehen. Die vorstehend genannten Öffnungsgrößen sind dabei nur beispielhaft genannt, jede andere Öffnungsgrößenkombination ist genauso möglich. Die geschlossenen Bereiche stellen einen definierten Abstand zwischen zwei Bereichen mit unterschiedlichen Öffnungen bereit, wobei die Abstände zwischen den Bereichen, d.h. die Größe bzw. Ausdehnung der geschlossenen Bereiche zwischen den getrennten Bereichen vorzugsweise 0,5 mm bis 450 mm betragen können.

Die Anzahl, die Form, und Ausdehnung der Bereiche mit unterschiedlichen Öffnungen ist von dem speziellen Bekleidungsartikel abhängig, welches mit dem Mehrlagen-Laminat hergestellt werden soll. Auch die Größe, Anzahl und Beschaffenheit der Öffnungen hängt von dem anzufertigenden Bekleidungsartikel ab. Mögliche Bekleidungsartikel, die mit dem erfindungsgemäßen Mehrlagen-Laminat hergestellt werden können, sind z.B. Oberbekleidungsprodukte wie z.B. Jacken, Pullover, Hemden, T-Shirts, Mäntel, Kleider, Armstulpen, Kappen, Mützen etc. Ferner können auch Unterbekleidungsprodukte wie z.B. Hosen, %-Hosen, Shorts, Röcke etc. mit dem Mehrlagen-Laminat hergestellt werden.

Die dritte Lage 30 kann äquivalent zur zweiten Lage 20 ausgebildet sein. In diesem Fall gilt oben bereits Beschriebenes in Verbindung mit der zweiten Lage 20 in gleicher Weise für die dritte Lage 30. Ferner können in der dritten Lage 30 vorhandene Bereiche mit unterschiedlichen Öffnungen in Übereinstimmung mit der Position oder auch der Größe der Bereiche mit unterschiedlichen Öffnungen der zweiten Lage 20 vorgesehen sein. Allerdings kann es durchaus vorteilhaft sein, gar keine Öffnungen in der dritten Lage 30 vorzusehen. Auch eine Bereitstellung von Bereichen, die sich von der zweiten Lage 20 unterscheiden, bzw. Öffnungen, die sich von der zweiten Lage unterscheiden (in Form und Größe), können durchaus in der dritten Lage 30 vorgesehen sein.

Die dritte Lage 30 kann ganz allgemein als Gestrickt, Gewirke oder bi-elastisches Gewebe ausgebildet sein. Die dritte Lage 30 kann aus Polyester, Polyamid, Elastan, Polyurethan oder Acryl hergestellt sein und kann ein- oder mehrfarbig auftreten, wobei die Farbigkeit durch gefärbtes Garn, Stückfärbung, einen Walzen- oder Sublimationsdruck erzeugt werden kann.

Wie in Fig. 1 gezeigt, bildet die erste Lage 10 in dem gezeigten 3-Lagen-Laminat eine mittlere Lage. Zusätzlich zu dem in Fig. 1 gezeigtem 3-Lagen-Laminat, können auch nur die erste und zweite Lage 10, 20 oder auch mehr als die gezeigten drei Lagen 10, 20, 30 vorgesehen sein. Auch können die oben beschriebenen Lagen jeweils mehrlagig ausgebildet sein (nicht gezeigt), d.h. eine der oben genannten Lagen oder auch mehrere der oben genannten Lagen können in dem Mehrlagen-Laminat der vorliegenden Erfindung mehr als einmal (mindestens zweimal) vorhanden sein.

Die zweite und/oder dritte Lage kann/können dabei aus Polyester, Polyamid, Elastan, Polyurethan oder Acryl hergestellt sein und ein oder mehrfarbig auftreten, wobei die Farbigkeit durch gefärbtes Garn, Stückfärbung, einen Walzen- oder Sublimationsdruck erzeugt werden kann.

Das Garn des Gestrickes oder des Gewirkes der unterschiedlichen Lagen kann aus Polyester, Polyamid, Elastan, Acryl, Baumwolle, Wolle oder Seide als auch deren Gemischen bestehen.

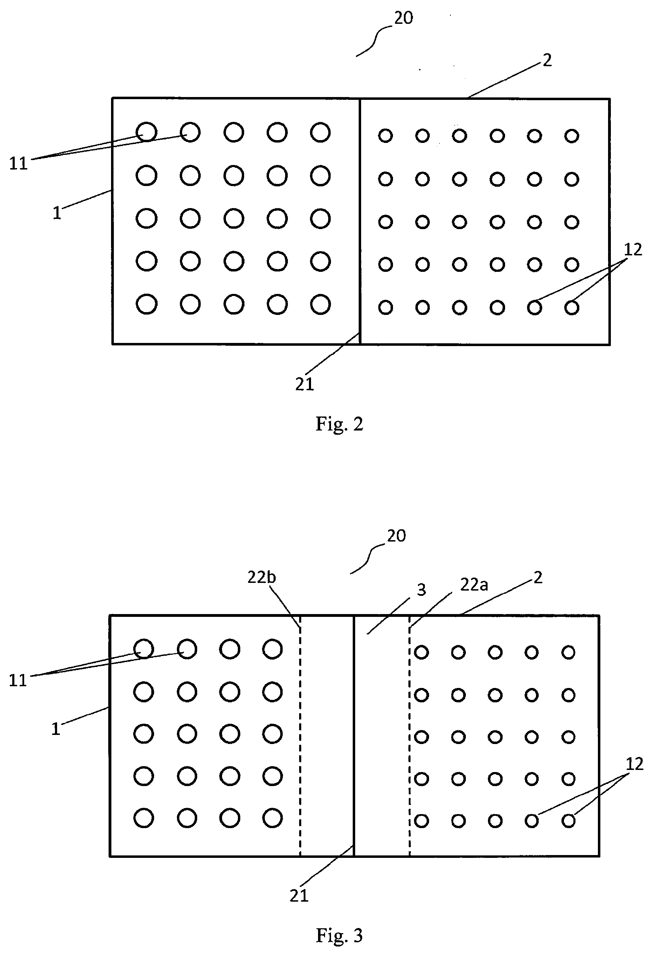

In Fig. 2 ist eine schematische Draufsicht auf ein Mehrlagen-Laminat gemäß einer bevorzugten Ausführungsform der vorliegenden Erfindung zu sehen, wobei die erste Lage 10 und die optionale Lage 30 nicht zu sehen sind, da diese von der äußeren zweiten Lage 20 verdeckt werden. Diese zweite gestrickte oder gewirkte Lage 20 weist mindestens einen ersten Bereich 1 mit Öffnungen 11 mindestens einer ersten Größe auf und mindestens einen zweiten Bereich 2 mit Öffnungen 12 mindestens einer zweiten Größe auf, wobei die unterschiedlichen Bereiche nahtlos ineinander übergehen. Bei der dargestellten Trennlinie 21 zwischen den beiden Bereichen 1 und 2 handelt es sich lediglich um eine virtuelle Linie, die die Trennung der zweiten Lage 20 in die beiden Bereich 1 und 2 verdeutlichen soll und im erfindungsgemäßen Laminat bevorzugt nicht vorhanden ist. In der dargestellten bevorzugten Ausführungsform sind die beiden Bereiche im Wesentlichen vollständig und homogen mit Öffnungen 11 bzw. 12 versehen, wobei die Öffnungen hier in einem regelmäßigen Muster angeordnet sind. Alternativ können auch Teilbereiche einer oder beider der Bereiche 1 und 2 frei von Öffnungen sein. Die Öffnungen können auch in einem anderen regelmäßigen oder unregelmäßigen Muster angeordnet sein. Die Öffnungen 11, 12 müssen auch nicht kreisförmig sein, sondern können eine beliebige andere Form haben. Der Übersichtlichkeit halber sind lediglich 25 erste Öffnungen 11 und 30 zweite Öffnungen 12 dargestellt. Selbstverständlich können deutlich mehr Öffnungen pro Bereich vorgesehen sein. Auch wenn die zweiten Öffnungen 12 bevorzugt kleiner sind als die ersten Öffnungen 11, können trotzdem mehr erste Öffnungen 11 als zweite Öffnungen 12 vorgesehen sein.

Der erste Bereich 1 und der zweite Bereich 2 grenzen in der Ausführungsform gemäß Fig. 2 direkt aneinander an, d.h. der Abstand zwischen den der virtuellen Linie 21 am nächsten liegenden ersten Öffnungen 11 von den der virtuellen Linie 21 am nächsten liegenden zweiten Öffnungen 12 ist etwa gleich groß wie der Abstand zwischen den ersten Öffnungen 11 und/oder zwischen den zweiten Öffnungen 12. Alternativ können der erste und zweite Bereich auch voneinander beabstandet sein, wie dies in der Ausführungsform gemäß Fig. 3 der Fall ist. Hier ist der Abstand zwischen den der virtuellen Linie 21 am nächsten liegenden ersten Öffnungen 11 von den der virtuellen Linie 21 am nächsten liegenden zweiten Öffnungen 12 deutlich größer als der Abstand zwischen den ersten Öffnungen 11 und der Abstand zwischen den zweiten Öffnungen 12. Diese Ausführungsform lässt sich so beschreiben, dass die beiden Bereiche 1 und 2 jeweils Teilbereiche ohne Öffnungen aufweisen, wie dies oben angedeutet wurde. Alternativ lässt sich die Ausführungsform gemäß Fig. 3 auch so verstehen, dass zusätzlich zu dem ersten und zweiten Bereich noch ein dritter Bereich 3 vorgesehen ist, der durch die beiden gestrichelt dargestellten virtuellen Trennlinien 22a und 22b begrenzt wird und der vollkommen frei von ersten und zweiten Öffnungen ist. In diesem dritten Bereich sind lediglich Öffnungen vorgesehen, die durch die herstellungsbedingte Maschenweite der gestrickten oder gewirkten Lage 20 bedingt sind. Dabei sind die Öffnungen 11, 12 der zweiten gestrickten oder gewirkten Lage 20 größer, bevorzugt um ein Vielfaches größer, als die herstellungsbedingte Maschenweite der zweiten gestrickten oder gewirkten Lage 20.

Erfindungsgemäß kann auch lediglich ein erster Bereich 1 mit Öffnungen 11 mindestens einer ersten Größe und ein dritter Bereich 3 mit Öffnungen mindestens einer zweiten Größe, die der herstellungsbedingten Maschenweite entsprechen, vorgesehen sein, wobei die unterschiedlichen Bereiche nahtlos ineinander übergehen.

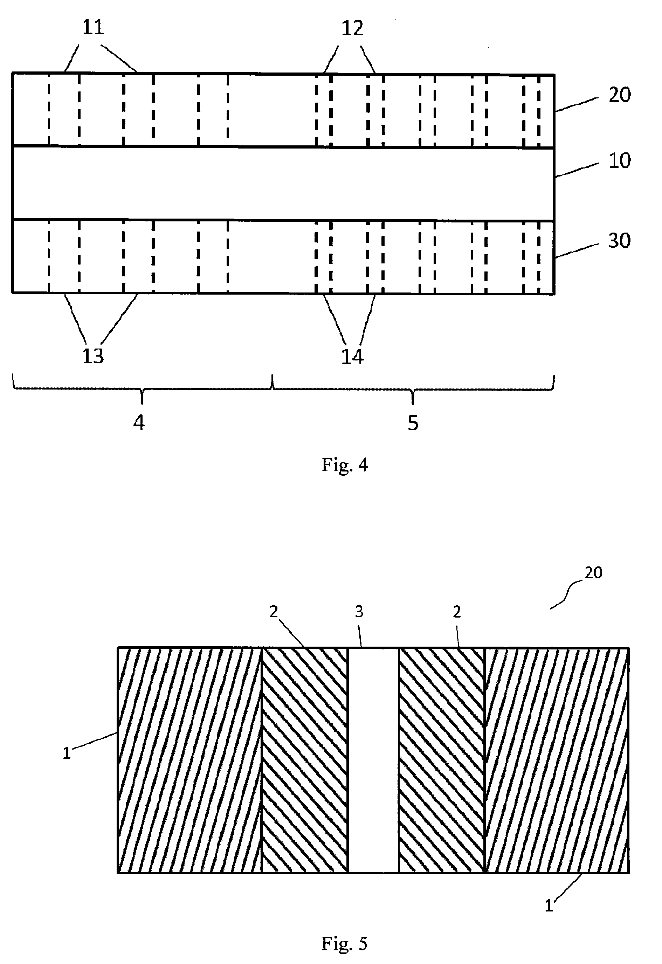

Wie oben ausgeführt wurde, kann erfindungsgemäß auch eine optionale dritte Lage 30 vorgesehen sein, wie dies schematisch in der Querschnittansicht gemäß Fig. 4 zu sehen ist. Die dritte Lage muss weder eine gestrickte oder gewirkte Lage sein noch muss diese, wie in Fig. 4 dargestellt, Öffnungen aufweisen. Es ist jedoch bevorzugt, dass die dritte Lage 30 eine gestrickte oder gewirkte Lage ist und/oder mindestens einen ersten Bereich 4 mit Öffnungen 14 mindestens einer ersten Größe und/oder mindestens einen zweiten Bereich 5 mit Öffnungen 15 mindestens einer zweiten Größe aufweist, wobei die unterschiedlichen Bereiche bevorzugt ebenfalls nahtlos ineinander übergehen. In der bevorzugten Ausführungsform gemäß Fig. 4 ist der erste Bereich 1 der zweiten Lage 20 gleich groß wie und in Registrierung mit dem ersten Bereich 4 der dritten Lage 30. Ebenso ist der zweite Bereich 2 der zweiten Lage 20 gleich groß wie und in Registrierung mit dem zweiten Bereich 5 der dritten Lage 30. Beides muss nicht der Fall sein. Ferner sind hier zusätzlich die Öffnungen 11 in Registrierung mit den Öffnungen 13 und die Öffnungen 12 in Registrierung mit den Öffnungen 14 angeordnet. Auch wenn dies von Vorteil für eine gute Belüftung sein kann, ist diese Anordnung nicht zwingend erforderlich. Die Öffnungen der dritten Lage 30 können eine andere Größe und/oder eine andere Form und/oder eine andere Anordnung aufweisen als die Öffnungen der zweiten Lage 20. Es können auch jeweils unterschiedlich viele Öffnungen vorgesehen sein.

Selbstverständlich ist die Erfindung nicht auf mehrlagige-Laminate mit lediglich zwei oder drei Bereichen beschränkt. Vielmehr kann eine Vielzahl von gleichen und/oder unterschiedlichen Bereichen vorgesehen sein. Eine beispielhafte Anordnung von zwei ersten Bereichen 1, zwei zweiten Bereichen 2 und einem dritten Bereich (mit lediglich herstellungsbedingten Maschen) ist in Fig. 5 gezeigt.

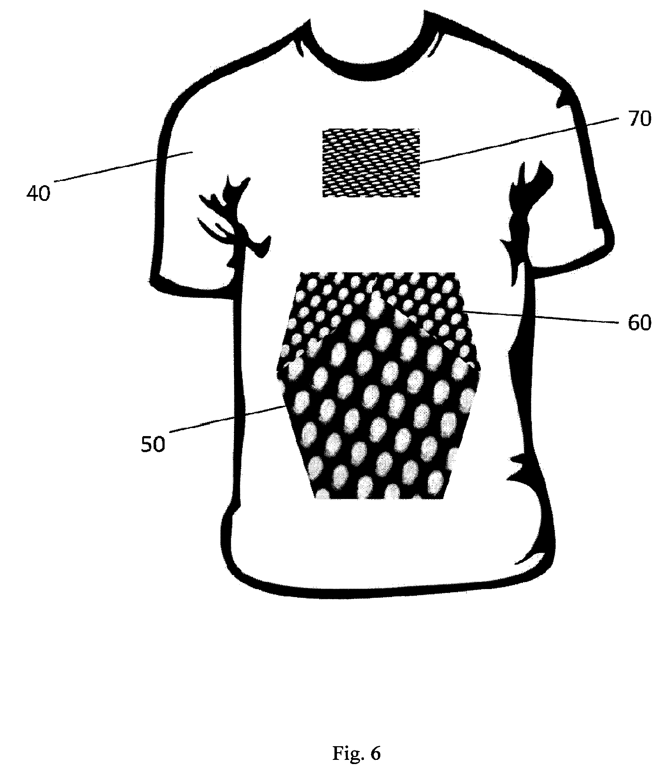

Fig. 6 zeigt schematisch eine Vorderansicht eines T-Shirts 40 mit drei Bereichen 50, 60, 70 mit unterschiedlich großen Öffnungen. Wie in Fig. 6 gezeigt, weist das T-Shirt 40 einen ersten Bereich 50 und einen zweiten Bereich 60 auf, wobei die beiden Bereiche direkt, d.h. nahtlos, ineinander übergehen. Zusätzlich zeigt Fig. 6 einen dritten Bereich 70, der von dem ersten und dem zweiten Bereich 50, 60 beabstandet ist. In der beispielhaften Ausführungsform gemäß Fig. 6 sind somit drei Bereiche mit unterschiedlichen Öffnungen bzw. unterschiedlichen Öffnungsgrößen gezeigt. Erfindungsgemäß gehen alle Bereich nahtlos ineinander über, wie hier der Bereich 50 in den Bereich 60, bzw. nahtlos in Bereiche einer herstellungsbedingten Maschenweite (geschlossene Struktur), wie hier der Bereich 70.

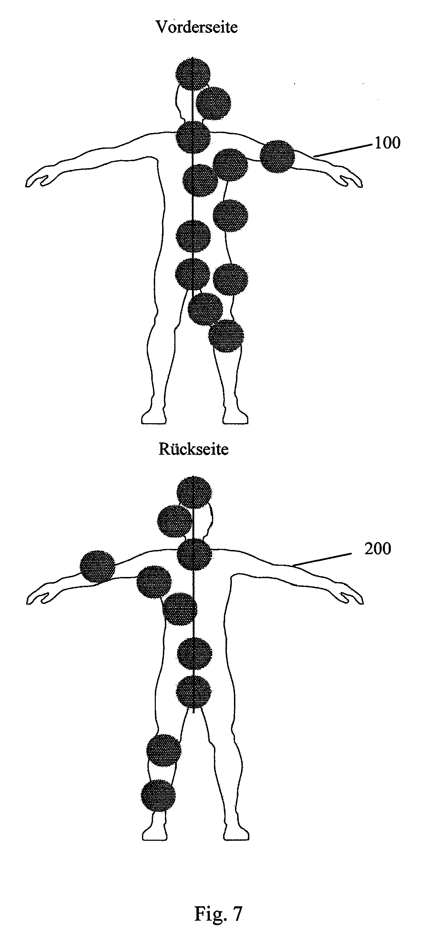

Fig. 7 zeigt schematisch eine Vorderansicht 100 und eine Hinteransicht 200 eines menschlichen Körpers und darauf abgebildet besonders vorteilhafte Positionen für Bereiche mit Öffnungen (kreisrunde strukturierte Bereiche) verschiedener Größe. Auch wenn die angedeuteten Bereiche in Fig. 7 gleich groß eingezeichnet sind, können diese Bereiche unterschiedliche Ausmaße und Formen haben. Wie oben bereits ausgeführt sind die Öffnungen in mindestens zwei verschiedenen Bereichen unterschiedlich groß und können ebenfalls unterschiedlichste Formen annehmen.

Ebenfalls in Fig. 7 eingezeichnet ist die Mittelachse der Körpers, wobei die verschiedenen Positionen der Bereiche mit Öffnungen vorzugsweise im Wesentlichen spiegelsymmetrisch zur Mittelachse des Körpers angeordnet sind (nicht gezeigt). Dies ist allerdings nicht zwingend und kann bei verschiedenen Bekleidungsartikeln durchaus davon abweichend ausgestaltet sein. Die in Fig. 7 gezeigten Positionen sind selbstverständlich nicht erschöpfend und auch nicht in ihrer Gesamtheit in einem Bekleidungsartikel nötig. Die Fig. 7 bezieht sich dabei lediglich beispielhaft auf Oberbekleidungsprodukte bzw. Unterbekleidungsprodukte.

Im Fall von Oberbekleidungsprodukten sind die oben beschriebenen Bereiche mit unterschiedlichen Öffnungen in der zweiten Lage 20 bzw. der dritten Lage 30 besonders vorteilhaft im vorderen Bereich wie z.B. am vorderen Kragen und Kapuzenbereich, am Seitenbereich des Kragens und der Kapuze, am Unterarmbereich, am Seitenbereich und/oder an der vorderen Mitte und Brustbereich. Im hinteren Bereich eines Oberbekleidungsproduktes können die Bereiche mit unterschiedlichen Öffnungen besonders vorteilhaft am hinteren Kragen und Kapuzenbereich, am Unterarmbereich, am Seitenbereich und/oder am hinteren Mittenbereich/Rückgrat sein.

Im Fall von Unterbekleidungsprodukten sind die oben beschriebenen Bereiche mit unterschiedlichen Öffnungen in der zweiten Lage 20 bzw. der dritten Lage 30 besonders vorteilhaft im vorderen Bereich z.B. am Taillenbereich unterhalb des Bundes, an der vorderen Passe, an der Innenseite des Oberschenkels, auf den Knien und/oder an den Schienenbeinen. Im hinteren Bereich eines Unterbekleidungsproduktes können die Bereiche mit unterschiedlichen Öffnungen besonders vorteilhaft am Taillenbereich unterhalb des Bundes, an der hinteren Passe, an der Innenseite des Oberschenkels, im Bereich der Kniekehle und/oder im Bereich der Wade sein.

Die Auflistung der anhand von Fig. 7 beschriebenen Bereiche kann je nach Anwendung und Wissensstand über mögliche Schweißbildungsregionen an bestimmten Körperstellen abweichen. Ferner ist die vorliegende Erfindung nicht auf eine der oben beschriebenen Oberbekleidungs- bzw. Unterbekleidungsprodukte beschränkt, sondern kann auf jeder Art von Bekleidungsartikel übertragen werden. Die Bereiche mit unterschiedlichen Öffnungen in der zweiten Lage 20 bzw. der dritten Lage 30 sind dabei bevorzugt an den besonders schweißbildenden Stellen des Körpers angebracht um eine besonders effiziente Belüftung und Feuchtigkeitsabtransport für diese Stellen bereitzustellen.

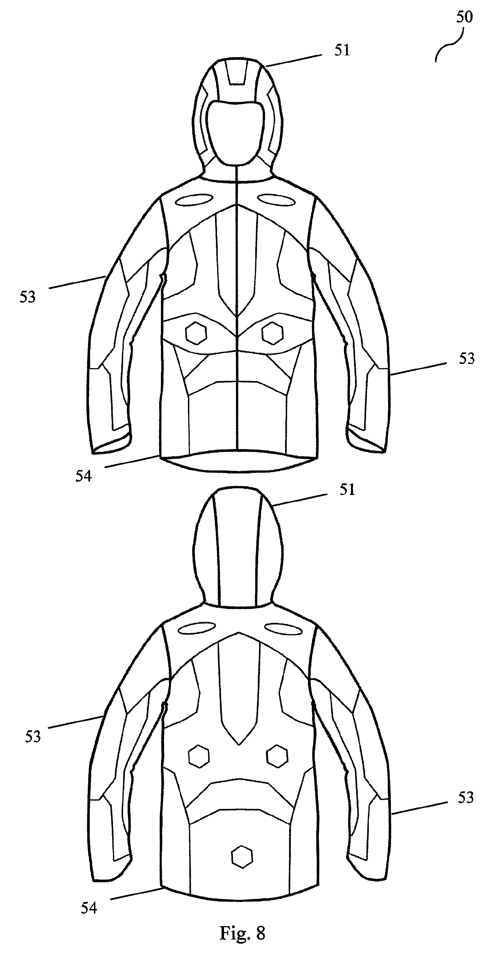

In Fig. 8 ist eine Jacke 50 mit einer Kapuze 51, zwei Armteilen 52, 53 und einem Mittelteil 54 in einer Vorderansicht (obere Abbildung) und einer Rückansicht (untere Abbildung) gezeigt. Gemäß Fig. 8 sind die beispielhaft die erfindungsgemäßen Bereiche mit unterschiedlichen Öffnungsgrößen und deren Lage auf der Jacke 50 gezeigt. Jeder der dort gezeigten Bereiche kann ein Bereich mit Öffnungen aufweisen oder ein Bereich ohne Öffnungen darstellen, solange wenigstens einer der gezeigten Bereiche die erfindungsgemäßen Öffnungen aufweist.

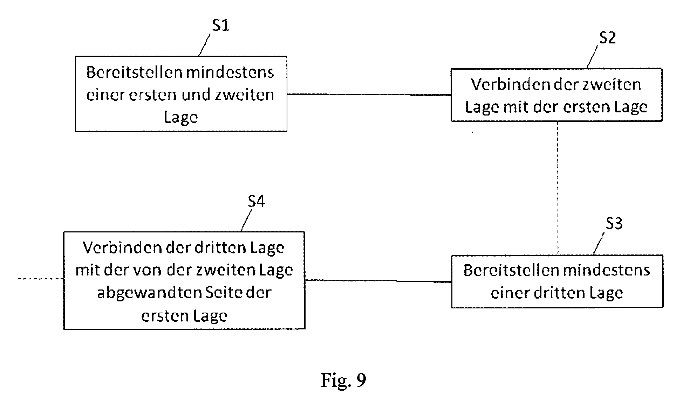

In Fig. 9 wird ein Ablaufdiagram des erfindungsgemäßen Verfahrens zur Herstellung eines Mehrlagen-Laminats für Bekleidungsartikel dargestellt. Die bereits oben anhand der Figuren 1 bis 8 beschriebenen strukturellen Merkmale des Mehrlagen-Laminats gemäß der vorliegenden Erfindung werden für die nachfolgende Beschreibung des Verfahrens übernommen.

Schritt S1 umfasst das Bereitstellen mindestens der ersten Lage 10 und mindestens der zweiten Lage 20, wobei die zweite Lage 20 wie oben beschrieben mindestens einen ersten Bereich mit Öffnungen mindestens einer ersten Größe aufweist und mindestens einen zweiten Bereich mit Öffnungen mindestens einer zweiten Größe aufweist und wobei die unterschiedlichen Bereiche nahtlos ineinander übergehen.

Gemäß eines zweiten Schritts S2 umfasst das Verfahren ferner das Verbinden der zweiten Lage 20 mit einer Seite der ersten Lage 10. Wie oben bereits beschrieben umfasst das Verbinden vorzugsweise das Verkleben der verschiedenen Lagen. Das Verkleben kann dabei durch großflächiges oder punktuelles Verkleben realisiert werden, wobei die Klebepunkte in Größe, Form und Abstand zueinander variieren können. Allerdings kann das Verbinden auch jede andere bekannte Verbindungsmethode (z.B. Vernähen) zum Verbinden mindestens zweier Lagen umfassen.

In einem dritten Schritt S3 kann optional (gestrichelte Verbindung) das Bereitstellen mindestens einer dritten Lage 30 vorgesehen sein. In diesem Fall umfasst das erfindungsgemäße Verfahren ebenfalls einen Schritt S4 zum Verbinden der dritten Lage 30 mit der von der zweiten Lage 20 abgewandten Seite der ersten Lage 10. Die dritte Lage 30 kann mindestens einen ersten Bereich mit Öffnungen mindestens einer dritten Größe aufweisen und mindestens einen zweiten Bereich mit Öffnungen mindestens einer vierten Größe aufweisen, wobei die unterschiedlichen Bereiche besonders bevorzugt nahtlos ineinander übergehen. Die dritte Lage kann allerdings auch völlig ohne Bereiche mit Öffnungen auskommen.

Die weiteren möglichen Schritte des Verfahrens sind in Fig. 9 nicht dargestellt, da diese zu speziellen Ausführungsformen der vorliegenden Erfindung gehören (angedeutet durch die offenen Verbindung ausgehend von S4). Das Bereitstellen der zweiten Lage 20 und/oder der dritten Lage 30 kann kontinuierliches Stricken oder Wirken der zweiten Lage 20 und/oder der dritten Lage 30 aufweisen, wobei das kontinuierliche Stricken oder Wirken vorzugsweise durch das Raschel-Jacquard-Verfahren erfolgt. Dadurch können sowohl Bereiche mit einer bestimmten herstellungsbedingten Maschenweite als auch die mindestens zwei Bereiche mit Öffnungen hergestellt werden, wobei die Öffnungen größer als die herstellungsbedingte Maschenweite sind und die verschiedenen Bereich nahtlos ineinander übergehen.

Alternativ zum kontinuierlichen Stricken oder Wirken der dritten Lage 30 kann das Verfahren ferner das Einbringen von Öffnungen mindestens einer dritten Größe in mindestens einen ersten Bereich und Öffnungen mindestens einer vierten Größe in mindestens einen zweiten Bereich der dritten Lage 30 aufweisen, wobei das Einbringen der Öffnungen in die dritte Lage vorzugsweise mittels Schneiden, Stanzen und/oder Laserschmelzen erfolgt.

## Patentansprüche

1. Mehrlagen-Laminat zur Herstellung von Bekleidungsartikeln, wobei das Mehrlagen-Laminat aufweist:
mindestens eine erste Lage (10), die aus einem wasserdichten und atmungsaktiven Material besteht, und
mindestens eine zweite gestrickte oder gewirkte Lage (20), die auf einer Seite der ersten Lage (10) angeordnet ist, wobei die zweite gestrickte oder gewirkte Lage (20) mindestens einen ersten Bereich (1) mit Öffnungen (11) mindestens einer ersten Größe aufweist und mindestens einen zweiten Bereich (2) mit Öffnungen (12) mindestens einer zweiten Größe aufweist und wobei die unterschiedlichen Bereiche nahtlos ineinander übergehen.

2. Mehrlagen-Laminat nach Anspruch 1, wobei das Mehrlagen-Laminat mindestens eine dritte Lage (30) aufweist, die auf der von der zweiten Lage (20) abgewandten Seite der ersten Lage (10) angeordnet ist.

3. Mehrlagen-Laminat nach Anspruch 2, wobei die dritte Lage (30) mindestens einen ersten Bereich (4) mit Öffnungen (13) mindestens einer dritten Größe aufweist und mindestens einen zweiten Bereich (5) mit Öffnungen (14) mindestens einer vierten Größe aufweist.

4. Mehrlagen-Laminat nach Anspruch 3, wobei der mindestens eine erste Bereich (4) der dritten Lage (30) und der der mindestens eine erste Bereich (1) der zweiten gestrickten oder gewirkten Lage (20) im Wesentlichen in Registrierung miteinander angeordnet sind.

5. Mehrlagen-Laminat nach Anspruch 3 oder 4, wobei die erste und dritte Größe im Wesentlichen gleich ist und/oder die zweite und vierte Größe im Wesentlichen gleich ist, wobei bevorzugt die Öffnungen (13) im ersten Bereich (4) der dritten Lage (30) und die Öffnungen (11) im ersten Bereich (1) der zweiten gestrickten oder gewirkten Lage (20) im Wesentlichen in Registrierung miteinander angeordnet sind und/oder die Öffnungen (14) im zweiten Bereich (5) der dritten Lage (30) und die Öffnungen (12) im zweiten Bereich (2) der zweiten gestrickten oder gewirkten Lage (20) im Wesentlichen in Registrierung miteinander angeordnet sind.

6. Mehrlagen-Laminat nach einem der Ansprüche 3 bis 5, wobei die Öffnungen im ersten und/oder zweiten Bereich der dritten Lage und/oder der zweiten gestrickten oder gewirkten Lage eine Öffnungsquerschnittfläche zwischen 0,2 mm² und 100 mm², bevorzugt zwischen 1,0 mm² und 27,0 mm² und besonders bevorzugt zwischen 3,75 mm² und 5 mm² aufweisen.

7. Mehrlagen-Laminat nach einem der vorigen Ansprüche, wobei die zweite gestrickte oder gewirkte Lage (20) eine bestimmte herstellungsbedingte Maschenweite aufweist und wobei die Öffnungen (11, 12) der zweiten gestrickten oder gewirkten Lage (20) größer sind als die herstellungsbedingte Maschenweite der zweiten gestrickten oder gewirkten Lage (20).

8. Mehrlagen-Laminat nach einem der vorigen Ansprüche, wobei die Öffnungen (11) mit der ersten Größe im ersten Bereich (1) der zweiten gestrickten oder gewirkten Lage (20) eine Öffnungsquerschnittfläche aufweisen, die mindestens 50%, bevorzugt mindesten 100%, besonders bevorzugt mindestens 200% größer ist als die Öffnungsquerschnittfläche der Öffnungen (12) mit der zweiten Größe im zweiten Bereich (2) der zweiten gestrickten oder gewirkten Lage (20).

9. Mehrlagen-Laminat nach einem der vorigen Ansprüche, wobei die zweite gestrickte oder gewirkte Lage (20) und/oder die dritte Lage (30) innerhalb mindestens eines der Bereiche Öffnungen mit mindestens zwei unterschiedlichen Größen aufweist.

10. Mehrlagen-Laminat nach einem der vorigen Ansprüche, wobei die Bereiche der zweiten gestrickten oder gewirkten (20) und/oder dritten Lage (30) mindestens 10 Öffnungen, bevorzugt mindestens 20 Öffnungen, weiter bevorzugt mindestens 50 Öffnungen und besonders bevorzugt mindestens 100 Öffnungen aufweisen.

11. Bekleidungsartikel (40; 100; 200) mit einem Mehrlagen-Laminat nach einem der vorigen Ansprüche, wobei die erste oder die dritte Lage eine Innenseite des Bekleidungsartikels darstellt und die zweite gestrickte oder gewirkte Lage (20) eine Außenseite des Bekleidungsartikels darstellt.

12. Bekleidungsartikel nach Anspruch 11, wobei die Bereiche mit Öffnungen der zweiten gestrickten oder gewirkten und/oder der dritten Lage an besonders schweißbildenden Körperstellen angeordnet sind.

13. Verfahren zur Herstellung eines Mehrlagen-Laminats für Bekleidungsartikel, wobei das Verfahren die folgenden Schritte aufweist:
Bereitstellen mindestens einer ersten wasserdichten und atmungsaktiven Lage und mindestens einer zweiten gestrickten oder gewirkten Lage, wobei die zweite gestrickte oder gewirkte Lage mindestens einen ersten Bereich mit Öffnungen mindestens einer ersten Größe aufweist und mindestens einen zweiten Bereich mit Öffnungen mindestens einer zweiten Größe aufweist und wobei die unterschiedlichen Bereiche nahtlos ineinander übergehen; und
Verbinden der zweiten gestrickten oder gewirkten Lage mit einer Seite der ersten Lage.

14. Verfahren nach Anspruch 13, wobei das Verfahren ferner aufweist:
Bereitstellen mindestens einer dritten Lage, wobei die dritte Lage vorzugsweise mindestens einen ersten Bereich mit Öffnungen mindestens einer dritten Größe aufweist und mindestens einen zweiten Bereich mit Öffnungen mindestens einer vierten Größe aufweist und wobei die unterschiedlichen Bereiche besonders bevorzugt nahtlos ineinander übergehen; und
Verbinden der dritten Lage mit der von der zweiten Lage abgewandten Seite der ersten Lage.

15. Verfahren nach Anspruch 13 oder 14, wobei das Bereitstellen der zweiten gestrickten oder gewirkten Lage und/oder der dritten Lage ein kontinuierliche Stricken oder Wirken der zweiten gestrickten oder gewirkten Lage und/oder der dritten Lage aufweist, wobei das kontinuierlichen Stricken oder Wirken vorzugsweise durch das Raschel-Jacquard-Verfahren erfolgt.

16. Verfahren nach Anspruch 15, wobei mit Hilfe des kontinuierlichen Strickens oder Wirkens sowohl Bereiche mit einer bestimmten herstellungsbedingten Maschenweite als auch die mindestens zwei Bereiche mit Öffnungen hergestellt werden, wobei die Öffnungen größer als die herstellungsbedingte Maschenweite sind und die verschiedenen Bereiche nahtlos ineinander übergehen.

17. Verfahren nach einem der Ansprüche 13 bis 16, wobei das Verbinden der zweiten gestrickten oder gewirkten Lage mit einer Seite der ersten Lage und/oder das Verbinden der dritten Lage mit der von der zweiten Lage abgewandten Seite der ersten Lage mittels Verkleben erfolgt.
